(19)

Europäisches Patentamt
European Patent Office
Office européen des brevets

(11) **EP 4 422 094 A1**

(12) **EUROPEAN PATENT APPLICATION**
published in accordance with Art. 153(4) EPC

(43) Date of publication:
**28.08.2024 Bulletin 2024/35**

(21) Application number: **22897808.6**

(22) Date of filing: **22.11.2022**

(51) International Patent Classification (IPC):
**H04B 17/309** (2015.01)

(52) Cooperative Patent Classification (CPC):
**H04B 17/309; H04B 17/391**

(86) International application number:
**PCT/CN2022/133534**

(87) International publication number:
**WO 2023/093725 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.11.2021 CN 202111406622**

(71) Applicant: **Huawei Technologies Co., Ltd.**
**Shenzhen, Guangdong 518129 (CN)**

(72) Inventors:
• **SUN, Yan**
  **Shenzhen, Guangdong 518129 (CN)**
• **CHAI, Xiaomeng**
  **Shenzhen, Guangdong 518129 (CN)**
• **SUN, Yaqi**
  **Shenzhen, Guangdong 518129 (CN)**
• **WU, Yiqun**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **CALIBRATION METHOD AND APPARATUS**

(57)     This application provides a calibration method and apparatus. The method includes: determining first channel state information and second channel state information, where the first channel state information is obtained through prediction via a first channel prediction model, and the second channel state information is determined based on channel estimation on a downlink signal from an access network device; and sending first information to the access network device if a difference metric value between the first channel state information and the second channel state information is greater than or equal to a first threshold, where the first information indicates the second channel state information.

FIG. 7

**Description**

**CROSS-REFERENCE TO RELATED APPLICATION**

This application claims priority to Chinese Patent Application No. 202111406622.0, filed with the China National Intellectual Property Administration on November 24, 2021 and entitled "CALIBRATION METHOD AND APPARATUS", which is incorporated herein by reference in its entirety.

**TECHNICAL FIELD**

This application relates to the field of communication technologies, and in particular, to a calibration method and apparatus.

**BACKGROUND**

In a wireless communication network, for example, in a mobile communication network, services supported by the network are increasingly diversified, and therefore requirements that need to be met are increasingly diversified. For example, the network needs to be able to support ultra-high rates, ultra-low latency, and/or ultra-large connections. This feature makes network planning, network configuration, and/or resource scheduling increasingly complex. In addition, because a network function is increasingly powerful, for example, supporting an increasingly high spectrum and supporting new technologies such as a high-order multiple-input multiple-output (multiple-input multiple-output, MIMO) technology, beamforming, and/or beam management, network energy saving becomes a hot research topic. These new requirements, scenarios, and features bring unprecedented challenges to network planning, operations and maintenance, and efficient operation. To meet this challenge, an artificial intelligence technology may be introduced into the wireless communication network, to implement network intelligence. On this basis, how to effectively implement artificial intelligence in a network is a problem worth studying.

**SUMMARY**

This application provides a calibration method and apparatus, to update a channel prediction model and avoid affecting communication performance.

According to a first aspect, this application provides a calibration method. The method is applicable to a scenario in which channel state information is predicted based on a prediction model. The method is performed by a terminal device or a module in the terminal device. Herein, an example in which the method is performed by the terminal device is used for description. The method includes: The terminal device determines first channel state information and second channel state information, where the first channel state information is obtained through prediction via a first channel prediction model, and the second channel state information is determined based on channel estimation on a downlink signal from an access network device; and sends first information to the access network device if a difference metric value between the first channel state information and the second channel state information is greater than or equal to a first threshold, where the first information indicates the second channel state information.

According to the foregoing method, when a deviation between the predicted first channel state information and the actually measured second channel state information is large, the first channel prediction model may be updated, to avoid affecting communication performance. In addition, fed-back channel state information may be further used for online training and update of a channel prediction model, to continuously improve performance of the channel prediction model.

In a possible design, if the difference metric value between the first channel state information and the second channel state information is less than a second threshold, second information is sent to the access network device, where the second information indicates that a prediction result of the first channel prediction model is accurate, and the second threshold is less than or equal to the first threshold.

In a possible design, the method further includes: training a to-be-updated channel prediction model based on the second channel state information, to obtain a second channel prediction model, where an initial value of the to-be-updated channel prediction model is the first channel prediction model; and updating the to-be-updated channel prediction model to the second channel prediction model.

In a possible design, information about the second channel prediction model includes variation information between the second channel prediction model and the first channel prediction model.

In a possible design, third information is sent to the access network device, where the third information indicates the information about the second channel prediction model.

In a possible design, that third information is sent to the access network device includes: sending the third information to the access network device when determining that the variation information between the first channel prediction model and the second channel prediction model is greater than or equal to a third threshold.

According to the foregoing method, when variation information between an updated channel prediction model and a channel prediction model indicated to the access network device last time is less than the third threshold, the updated channel prediction model may not be indicated to the access network device. This avoids frequently indicating the updated channel prediction model to the access network device, reduces signaling overheads, and improves system efficiency.

In a possible design, the method further includes: updating the first channel prediction model to the second channel prediction model.

In a possible design, the method further includes: receiving fourth information from the access network device, where the fourth information indicates information about a third channel prediction model.

According to the foregoing method, the access network device updates the first channel prediction model, to ensure that communication efficiency is improved, and avoid communication interruption caused because the access network device cannot obtain the updated prediction model for a long time period.

In a possible design, the method further includes: updating the first channel prediction model to the third channel prediction model.

In a possible design, the information about the third channel prediction model includes variation information between the third channel prediction model and the first channel prediction model.

In a possible design, the first channel prediction model is configured by the access network device, and the first channel prediction model is the same as a channel prediction model that is in the access network device.

The same prediction model is configured in the access network device and the terminal device, so that the terminal device can determine, based on downlink measurement information obtained through actual measurement, whether the prediction model configured in the access network device is accurate, and calibrate the prediction model in the access network device in real time when the prediction model is inaccurate.

In a possible design, the first information further indicates a time unit corresponding to the second channel state information.

According to a second aspect, this application provides a calibration method. The method is applicable to a scenario in which channel state information is predicted based on a prediction model. The method is performed by an access network device or a module in the access network device. Herein, an example in which the method is performed by the access network device is used for description. The method includes: The access network device sends a downlink signal to a terminal device; and receives first information or second information from the terminal device, where the first information indicates second channel state information, and the second channel state information is determined based on channel estimation on the downlink signal; and

the second information indicates that a prediction result of a first channel prediction model is accurate.

In a possible design, if the first information is received, the method further includes:

training a to-be-updated channel prediction model based on the second channel state information, to obtain a third channel prediction model, where an initial value of the to-be-updated channel prediction model is the first channel prediction model; and

updating the to-be-updated channel prediction model to the third channel prediction model.

In a possible design, information about the third channel prediction model includes variation information between the third channel prediction model and the first channel prediction model.

In a possible design, fourth information is sent to the terminal device, where the fourth information indicates the information about the third channel prediction model.

In a possible design, that fourth information is sent to the terminal device includes:

sending the fourth information to the terminal device when determining that the variation information between the first channel prediction model and the third channel prediction model is greater than or equal to a third threshold.

In a possible design, the method further includes: receiving third information from the terminal device, where the third information indicates information about a second channel prediction model; and updating the first channel prediction model to the second channel prediction model.

In a possible design, a difference metric value between first channel state information and the second channel state information is greater than or equal to a first threshold, and the first channel state information is obtained through prediction via the first channel prediction model.

In a possible design, the first information further indicates a time unit corresponding to the second channel state information.

According to a third aspect, this application provides a calibration method. The method is applicable to a scenario in which channel state information is predicted based on a prediction model. The method is performed by an access network device or a module in the access network device. Herein, an example in which the method is performed by the access network device is used for description. The method includes: The access network device determines first channel state information, where the first channel state information is obtained through prediction via a first channel prediction model; receives first information from a terminal device, where the first information indicates second channel state information corresponding to a downlink signal; trains the first channel prediction model based on the second channel state information if a difference metric value between the first channel state information and the second channel state information is greater than or equal to a first threshold, to obtain a second channel prediction model; and updates the first channel prediction model to the second channel prediction model.

According to the foregoing method, when a deviation between the predicted first channel state information and the actually measured second channel state information is large, the first channel prediction model may be updated, to avoid affecting communication performance and continuously improve performance of the channel prediction model.

In a possible design, the first information further indicates a time unit corresponding to the second channel state information.

According to a fourth aspect, this application further provides a communication apparatus. The communication apparatus can implement any method or any implementation provided in the first aspect. The communication apparatus may be implemented by hardware, may be implemented by software, or may be implemented by hardware executing corresponding software. The hardware or the software includes one or more units or modules corresponding to the foregoing functions.

In a possible implementation, the communication apparatus includes a processor. The processor is configured to support the communication apparatus in performing the method according to the first aspect. The communication apparatus may further include a memory. The memory may be coupled to the processor, and store program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. These units may perform corresponding functions in the foregoing method examples. For details, refer to the descriptions in the first aspect. Details are not described herein again.

According to a fifth aspect, this application further provides a communication apparatus. The communication apparatus can implement any method or any implementation provided in the second aspect or the third aspect. The communication apparatus may be implemented by hardware, may be implemented by software, or may be implemented by hardware executing corresponding software. The hardware or the software includes one or more units or modules corresponding to the foregoing functions.

In a possible implementation, the communication apparatus includes a processor. The processor is configured to support the communication apparatus in performing the method according to the second aspect or the third aspect. The communication apparatus may further include a memory. The memory may be coupled to the processor, and store program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. These units may perform corresponding functions in the foregoing method examples. For details, refer to the descriptions in the method provided in the second aspect or the third aspect. Details are not described herein again.

According to a sixth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to execute a computer program or instructions stored in the memory, to implement the method in any possible implementation of the first aspect. Optionally, the apparatus further includes a memory, and the memory stores a computer program or instructions.

According to a seventh aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to execute a computer program or instructions stored in the memory, to implement the method in any one of the second aspect or the third aspect and the possible implementations thereof. Optionally, the apparatus further includes a memory, and the memory stores a computer program or instructions.

According to an eighth aspect, a computer-readable storage medium is provided. The computer-readable storage medium stores a computer program or instructions. When the computer program or the instructions are run on a computer, the computer is enabled to implement the method in any possible implementation of the first aspect.

According to a ninth aspect, a computer-readable storage medium is provided. The computer-readable storage medium stores a computer program or instructions. When the computer program or the instructions are run on a computer, the computer is enabled to implement the method in any one of the second aspect or the third aspect and the possible implementations thereof.

According to a tenth aspect, a computer program product including computer-readable instructions is provided. When the computer-readable instructions are run on a computer, the computer is enabled to implement the method in any possible implementation of the first aspect.

According to an eleventh aspect, a computer program product including computer-readable instructions is provided. When the computer-readable instructions are run on a computer, the computer is enabled to implement the method in any one of the second aspect or the third aspect and the possible implementations thereof.

According to a twelfth aspect, a chip is provided. The chip includes a processor, and may further include a memory. The processor is coupled to the memory, and is configured to execute a computer program or instructions stored in the memory, to enable the chip to implement the method in any possible implementation of the first aspect.

According to a thirteenth aspect, a chip is provided. The chip includes a processor, and may further include a memory. The processor is coupled to the memory, and is configured to execute a computer program or instructions stored in the memory, to enable the chip to implement the method in any one of the second aspect or the third aspect and the possible implementations thereof.

According to a fourteenth aspect, a communication system is provided. The system includes an apparatus (such as a terminal device) for implementing the first aspect and an apparatus (such as an access network device) for implementing the third aspect.

## BRIEF DESCRIPTION OF DRAWINGS

FIG. 1 is a diagram of an architecture of a communication system applicable to this disclosure;
FIG. 2 is a diagram of a layer relationship of a neural network according to this disclosure;
FIG. 3 is an example diagram of an application framework of AI in a communication system according to this disclosure;
FIG. 4(a) to FIG. 4(d) are example diagrams of a network architecture to which a method provided in this disclosure may be applied;
FIG. 5 is a diagram of capability exchange according to this disclosure;
FIG. 6 is a diagram of a structure of a model according to this disclosure;
FIG. 7 is a schematic flowchart of a calibration method according to this disclosure;
FIG. 8 is a diagram of sending of a downlink signal according to this disclosure;
FIG. 9 is a schematic flowchart of a model update method according to this disclosure;
FIG. 10 is a schematic flowchart of a calibration method according to this disclosure;
FIG. 11 is a diagram of a structure of a communication apparatus according to this disclosure; and
FIG. 12 is a diagram of a structure of a communication apparatus according to this disclosure.

## DESCRIPTION OF EMBODIMENTS

The following describes embodiments of this application in detail with reference to the accompanying drawings in this specification.

The technical solutions of this disclosure may be applied to various communication systems, for example, a long term evolution (long term evolution, LTE) system, a 5th generation (5th generation, 5G) mobile communication system, or a next generation mobile communication system. This is not limited herein. The 5G system may also be referred to as a new radio (new radio, NR) system.

In this disclosure, descriptions are provided by using an example of interaction between a terminal device and an access network device. It should be noted that, the method provided in this disclosure not only may be applied to interaction between the terminal device and a network side, but also may be applied to interaction between any two devices. This is not limited in this disclosure.

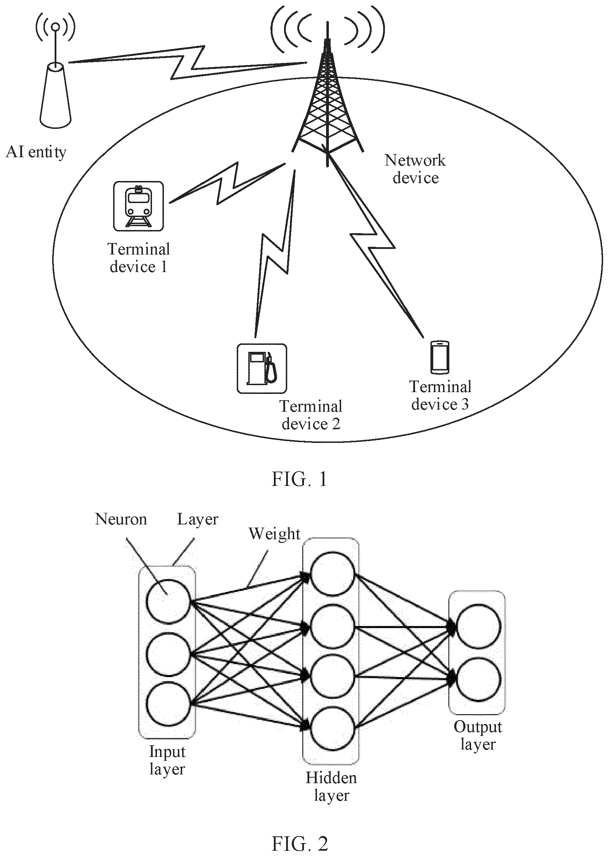

For ease of understanding this disclosure, the communication system shown in FIG. 1 is first used as an example to describe in detail the communication system applicable to this disclosure. FIG. 1 is a diagram of an architecture of a communication system to which this disclosure may be applied. The communication system includes an access network device and a terminal device. The terminal device may establish a connection to the access network device, and communicate with the access network device. FIG. 1 is merely a diagram. Quantities of access network devices and terminal devices included in the communication system are not limited in this disclosure.

To support artificial intelligence (artificial intelligence, AI) in a wireless network, a dedicated AI entity (or referred to as an AI module) may be further introduced into the network. The AI entity may correspond to one independent network element, or may be located inside a network element, and the network element may be a core network device, an access network device, operations, administration and maintenance (operations, administration and maintenance, OAM), or the like. For example, as shown in FIG. 1, the AI entity is located outside the access network device, and may communicate with the access network device. The access network device may forward, to the AI entity, data that is related to an AI model and that is reported by the terminal device, and the AI entity performs operations such as training dataset construction and model training, and forward the trained artificial intelligence model to each terminal device through the access network device. In this disclosure, the OAM is configured to operate, manage, and/or maintain the core network device (operations, administration and maintenance of the core network device), and/or is configured to operate, manage, and/or maintain the access network device (operations, administration and maintenance of the access network device). For example, this disclosure includes first OAM and second OAM. The first OAM is the operations, administration and maintenance of the core network device, and the second OAM is the operations, administration and maintenance of the access network device. The first OAM and/or the second OAM may include the AI entity. For another example, this disclosure includes third OAM, and the third OAM is the operations, administration and maintenance of both the core network device and the access network device.

Optionally, to match and support AI, the AI entity may be integrated into a terminal or a terminal chip.

Optionally, in this disclosure, the AI entity may also have another name, and is mainly configured to implement an AI function (or referred to as an AI-related operation). A specific name of the AI entity is not limited in this disclosure.

In this disclosure, the AI model is a specific method for implementing the AI function, and the AI model represents a mapping relationship between an input and an output of the model. The AI model may be a neural network, a random forest model, a support vector machine model, a decision tree model, or another machine learning model. The AI model may be referred to as a model for short. The AI-related operation may include at least one of the following: data collection, model training, model information release, model inference (or referred to as model inference or prediction), inference result release, or the like.

In this disclosure, the terminal device may be referred to as a terminal for short. The terminal device may communicate with one or more core networks through a radio access network (radio access network, RAN).

In this disclosure, the terminal device may be a device having a radio transceiver function or a chip that can be disposed in the device. The terminal device may also be referred to as user equipment (user equipment, UE), an access terminal, a subscriber unit, a subscriber station, a mobile station, a remote station, a remote terminal, a mobile device, a user terminal, a wireless communication device, a user agent, a user apparatus, or the like. The terminal device in this disclosure may be a mobile phone (mobile phone), a pad (Pad), a computer with a radio transceiver function, a virtual reality (virtual reality, VR) terminal, an augmented reality (augmented reality, AR) terminal, a wearable device, a vehicle, an uncrewed aerial vehicle, a helicopter, an aircraft, a ship, a robot, a robot arm, a smart home device, or the like. The terminal device in this disclosure may be widely used in communication in various scenarios, for example, including but not limited to at least one of the following scenarios: enhanced mobile broadband (enhanced mobile broadband, eMBB), ultra-reliable and low-latency communication (ultra-reliable low-latency communication, URLLC), device-to-device (device-to-device, D2D), vehicle to everything (vehicle to everything, V2X), machine-type communication (machine-type communication, MTC), massive machine-type communication (massive machine-type communication, mMTC), internet of things (internet of things, IoT), virtual reality, augmented reality, industrial control, autonomous driving, remote medical, a smart grid, smart furniture, smart office, smart wearable, smart transportation, a smart city, or the like. A specific technology and a specific device form that are used by the terminal are not limited in this disclosure.

In this disclosure, an apparatus configured to implement a function of the terminal may be the terminal, or may be an apparatus that can support the terminal in implementing the function, for example, a chip system, a hardware circuit, a software module, or a combination of a hardware circuit and a software module. The apparatus may be installed in the terminal or may be matched with the terminal for usage.

The access network device may be a base station (base station), a NodeB (NodeB), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN or open RAN), a next generation base station in a 6th generation (6th generation, 6G) mobile communication system, a base station in a future mobile communication system, an access node in a wireless fidelity (wireless fidelity, Wi-Fi) system, or the like; or may be a module or unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The radio access network device may be a macro base station, may be a micro base station or an indoor base station, or may be a relay node, a donor node, or the like. A specific technology and a specific device form that are used by the access network device are not limited in this disclosure.

(1) Protocol layer structure

Communication between the access network device and the terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to perform transmission of data related to the AI function.

(2) Central unit (central unit, CU) and distributed unit (distributed unit, DU)

The access network device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. Specific names of the interfaces are not limited in this disclosure. The CU and the DU may be divided based on protocol layers of the wireless network. For example, functions of the PDCP layer and protocol layers above the PDCP layer are disposed on the CU, and functions of protocol layers below the PDCP layer (for example, the RLC layer and the MAC layer) are disposed on the DU. For another example, functions of protocol layers above the PDCP layer are disposed on the CU, and functions of the PDCP layer and protocol layers below the PDCP layer are disposed on the DU. This is not limited.

Division of processing functions of the CU and the DU based on the protocol layers is merely an example, and the processing functions of the CU and the DU may alternatively be divided in another manner. For example, the CU or the DU may be divided into functions having more protocol layers. For another example, the CU or the DU may be further divided into some processing functions having protocol layers. In a design, some functions of the RLC layer and functions of protocol layers above the RLC layer are configured on the CU, and remaining functions of the RLC layer and functions of protocol layers below the RLC layer are configured on the DU. In another design, division of functions of the CU or the DU may alternatively be performed based on service types or other system requirements. For example, the division may be performed based on latency. Functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When the PHY layer is used for sending, functions of the PHY layer may include at least one of the following functions: a cyclic redundancy check (cyclic redundancy check, CRC) bit, channel coding, rate matching, scrambling, modulation, layer mapping, precoding, resource mapping, physical antenna mapping, or radio frequency sending. When the PHY layer is used for receiving, functions of the PHY layer may include at least one of the following: CRC check, channel decoding, de-rate matching, descrambling, demodulation, layer demapping, channel detection, resource demapping, physical antenna demapping, or radio frequency receiving. The higher-layer functions of the PHY layer may include some functions of the PHY layer. For example, the some functions are closer to the MAC layer. The lower-layer functions of the PHY layer may include some other functions of the PHY layer. For example, the some other functions are closer to the radio frequency receiving function. For example, the higher-layer functions of the PHY layer may include CRC code addition, channel coding, rate matching, scrambling, modulation, and layer mapping, and the lower-layer functions of the PHY layer may include precoding, resource mapping, physical antenna mapping, and radio frequency sending. Alternatively, the higher-layer functions of the PHY layer may include CRC code addition, channel coding, rate matching, scrambling, modulation, layer mapping, and precoding. The lower-layer functions of the PHY layer may include resource mapping, physical antenna mapping, and radio frequency sending. For example, the higher-layer functions of the PHY layer may include CRC check, channel decoding, de-rate matching, decoding, demodulation, and layer demapping, and the lower-layer functions of the PHY layer may include channel detection, resource demapping, physical antenna demapping, and radio frequency receiving. Alternatively, the higher-layer functions of the PHY layer may include CRC check, channel decoding, de-rate matching, decoding, demodulation, layer demapping, and channel detection, and the lower-layer functions of the PHY layer may include resource demapping, physical antenna demapping, and radio frequency receiving.

For example, the functions of the CU may be implemented by one entity, or may be implemented by different entities. For example, the functions of the CU may be further divided. In other words, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by these modules also fall within the protection scope of this disclosure.

In a possible implementation, the access network device includes the CU-CP, the CU-UP, the DU, and the RU. For example, an execution entity of this disclosure includes the DU, or includes the DU and the RU, or includes the CU-CP, the DU, and the RU, or includes the CU-UP, the DU, and the RU. This is not limited. Methods performed by the modules also fall within the protection scope of this disclosure.

In this disclosure, an apparatus configured to implement the function of the access network device may be the access network device, or may be an apparatus that can support the access network device in implementing the function, for example, a chip system. The apparatus may be installed in the access network device or used in matching with the access network device.

This disclosure is applicable to the following scenario: The access network device predicts, by using the AI model, information that needs to be measured by the terminal device, to reduce frequent sending of a downlink signal by the access network device, and reduce frequent measurement of the information by the terminal device based on the downlink signal. This reduces resource overheads of the information and saves computing resources of the terminal device.

For example, in a mobile communication system, obtaining accurate channel state information (channel state information, CSI) of a radio channel can significantly improve transmission performance of the communication system. The access network device may determine precoding of a matching radio channel based on the CSI, and perform precoding processing on sending data to obtain a transmission diversity gain and a spatial beamforming gain, reduce interference, and improve a transmission rate and spectral efficiency. CSI of a sending link from the access network device to the terminal device is referred to as channel state information at the transmitter (channel state information at the transmitter, CSIT). A typical method for obtaining the CSIT is as follows: The access network device sends a reference signal to the terminal device, and the terminal device estimates the CSI based on the reference signal, and feeds back the estimated CSI to the access network device. In this method, a receiver needs to periodically feed back the estimated CSI, resulting in high air interface overheads.

To reduce feedback overheads, a mathematical model-based CSI prediction solution may be used. A main principle of the mathematical model-based CSI prediction solution is to use a time sequence processing algorithm in a statistical signal processing theory, such as an auto-regression model (auto-regression model, AR), to perform analysis processing on historical CSI, and perform mathematical operations such as weighting and interpolation on the historical CSI, to predict CSIT that is at a future moment. An entire CSI prediction algorithm uses a historical CSI feedback as an input and outputs a CSIT prediction value that is at the future moment. In the mathematical model-based CSI prediction solution, the terminal device does not need to feed back the estimated CSI at a prediction moment. Therefore, CSI feedback overheads on an air interface can be reduced.

However, in the foregoing prediction solution, regression analysis is performed on historical CSI feedback by using a mathematical model, and historical CSI at adjacent moments needs to have a strong correlation to predict accurate CSI. In other words, good prediction performance is provided only for a stable channel with a smooth change trend. For a non-stable channel with a variable channel change trend, the accurate CSI predicted in the prediction solution is inaccurate, which causes deterioration of communication performance. In addition, because the prediction solution is a solution based on a unified mathematical expression, no targeted design is made for different channel types, and change rules of the different channel types differ greatly, it is difficult to perform adaptive processing and update on the different channel types in the prediction solution. Consequently, performance of the prediction solution varies greatly in different channel environments, and performance is unstable in an actual system.

To resolve the foregoing problem, in this disclosure, channel state information prediction is performed by using a machine learning technology, so that air interface overheads can be reduced, and adaptability and robustness of an actual channel can be improved. Specifically, the access network device inputs, into an artificial intelligence model, pieces of CSI that are determined based on a reference signal and that are at a current moment and a past moment, to predict a CSI that is at a future moment through the artificial intelligence model. This may be understood as performing extrapolation in time domain, to infer the future CSI by using the current CSI and the historical CSI.

Further, in this disclosure, an identical artificial intelligence model may be deployed for the access network device and the terminal device, the terminal device may predict, based on the artificial intelligence model, the predicted CSI that is at the future moment, and the terminal device may further obtain actual CSI by measuring the reference signal; and when a difference metric value between the predicted CSI and the actual CSI is large, the access network device or the terminal device may retrain the artificial intelligence model, to check the artificial intelligence model. Details are described below.

Before the method in this disclosure is described, some related knowledge about artificial intelligence is first briefly described. The artificial intelligence enables a machine to have human intelligence. For example, the machine can simulate some intelligent behavior of human beings by using computer software and hardware. To implement the artificial intelligence, machine learning methods or many other methods can be used. For example, machine learning includes a neural network. The neural network (neural network, NN) is a specific implementation of the machine learning. According to the general approximation theorem, the neural network can approximate any continuous function in theory, so that the neural network has a capability of learning any mapping. Therefore, the neural network can accurately perform abstract modeling for a complex high-dimension problem. An idea of the neural network is from a neuron structure of brain tissue. Each neuron performs a weighted summation operation on input values of the neuron, and outputs a result of the weighted summation through an activation function. Assuming that an input of the neuron is $\mathbf{x} = [x_0, ..., x_n]$, a weight corresponding to the input is $w = [w_0, ..., w_n]$, an offset of the weighted summation is b. Forms of the activation function may be diversified. Assuming that an activation function of one neuron is $y = f(z) = \max(0, z)$, an output of the neuron is
$$y = f\left(\sum_{i=0}^{i=n} w_i * x_i + b\right) = \max\left(0, \sum_{i=0}^{i=n} w_i * x_i + b\right)$$
. For another example, if an activation function of one neuron is $y = f(z) = z$ , an output of the neuron is $y = f\left(\sum_{i=0}^{i=n} w_i * x_i + b\right) = \sum_{i=0}^{i=n} w_i * x_i + b$ . $w_i$, $x_i$, and b may be various possible values such as a decimal, an integer (including 0, a positive integer, a negative integer, or the like), or a complex number. Activation functions of different neurons in the neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 2 is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. The input layer of the neural network performs neuron processing on a received input, and then transfers a result to an intermediate hidden layer. The hidden layer then transfers a calculation result to the output layer or an adjacent hidden layer. Finally, the output layer obtains an output result of the neural network. One neural network may include one hidden layer or a plurality of hidden layers that are sequentially connected. This is not limited. In a training process of the neural network, a loss function may be defined. The loss function describes a difference value or a difference between an output value of the neural network and an ideal target value. A specific form of the loss function is not limited in this disclosure. A training process of the neural network is a process of adjusting a neural network parameter, such as a quantity of layers and a width of the neural network, a weight of a neuron, and/or a parameter in an activation function of a neuron, so that a value of the loss function is less than a threshold or meets a target requirement. In other words, the difference between the output value of the neural network and the ideal target value is the smallest.

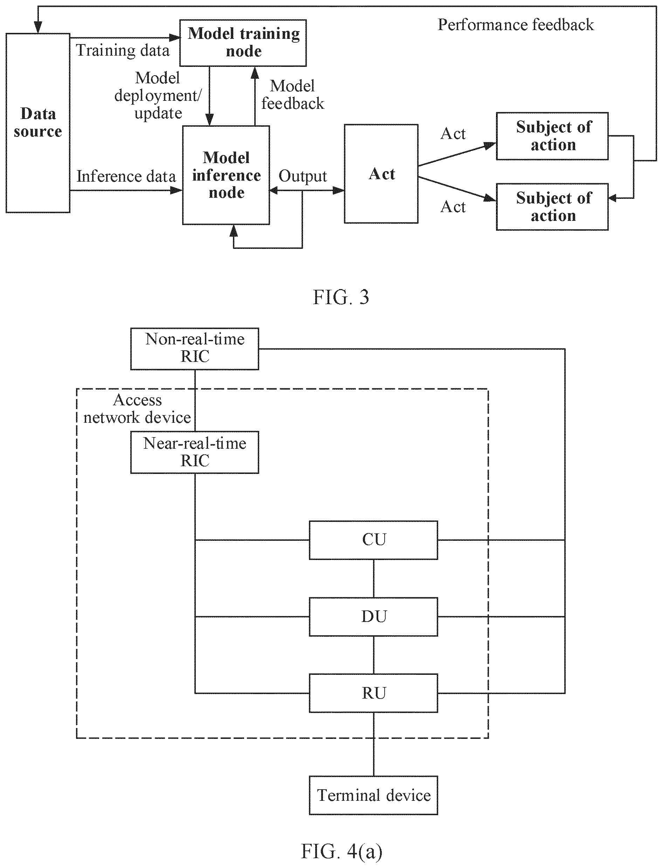

FIG. 3 is an example diagram of a first application framework of AI in a communication system. In FIG. 3, a data source (data source) is used to store training data and inference data. A model training node (model training host) analyzes or trains training data (training data) provided by the data source, to obtain an AI model, and deploys the AI model on a model inference node (model inference host). The AI model represents a mapping relationship between an input and an output of the model. Obtaining an AI model through learning by the model training node is equivalent to obtaining the mapping relationship between the input and the output of the model through learning by the model training node by using training data. The model inference node performs inference based on the inference data provided by the data source by using the AI model and obtains an inference result. The method may also be described as follows: The model inference node inputs the inference data into the AI model, and obtains an output by using the AI model. The output is the inference result. The inference result may indicate a configuration parameter used (acted) by a subject of action, and/or an operation performed by the subject of action. The inference result may be planned by an actor (actor) entity in a unified manner, and sent to one or more subjects of action (for example, network elements) for action.

In this disclosure, the application framework shown in FIG. 3 may be deployed on the network element shown in FIG. 1. For example, the application framework in FIG. 3 may be deployed on the access network device or the AI entity in FIG. 1. For example, in the access network device, the model training node may analyze or train training data (training data) provided by the data source, to obtain a model. The model inference node can perform inference by using the model and inference data provided by the data source, and obtain an output of the model. To be specific, an input of the model includes the inference data, and the output of the model is an inference result corresponding to the model. For example, the model training node is a CU, and the model inference node is a CU or a DU; or the model training node is a DU, and the model inference node is a DU; or the model training node is a near-real-time RIC described below, and the model inference node is a near-real-time RIC, a CU, or a DU. For example, a terminal device is considered as a subject of action in FIG. 3. The access network device may send the inference data and/or the inference result corresponding to the model to the terminal device, and the terminal device may perform a corresponding operation based on the inference data and/or the inference result.

With reference to FIG. 4(a) to FIG. 4(d), the following describes a network architecture to which a communication solution provided in this disclosure may be applied.

As shown in FIG. 4(a), in a first possible implementation, an access network device includes a near-real-time access network intelligent control (RAN intelligent controller, RIC) module, configured to perform model learning and/or inference. For example, the near-real-time RIC may obtain information on a network side and/or a terminal side from at least one of a CU, a DU, and an RU, and the information may be used as training data or inference data. Optionally, the near-real-time RIC may submit an inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC may be configured to train an AI model, and inference is performed by using the AI model.

As shown in FIG. 4(a), in a second possible implementation, a non-real-time RIC (optionally, the non-real-time RIC may be located in OAM or a core network device) other than an access network device is included, and is used for model learning and inference. For example, the non-real-time RIC may obtain information on the network side and/or the terminal side from at least one of the CU, the DU, and the RU. The information may be used as training data or inference data, and an inference result may be submitted to at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU. For example, the non-real-time RIC is configured to train an AI model, and inference is performed by using the model.

As shown in FIG. 4(a), in a third possible implementation, an access network device includes a near-real-time RIC, and the non-real-time RIC (optionally, the non-real-time RIC may be located in OAM or a core network device) other than the access network device is included. Same as the second possible implementation, the non-real-time RIC may be configured to perform model learning and/or inference; and/or, same as the first possible implementation, the near-real-time RIC may be configured to perform model learning and/or inference; and/or the near-real-time RIC may obtain AI model information from the non-real-time RIC, obtain information on the network side and/or the terminal side from at least one of the CU, the DU, and the RU, and obtain an inference result by using the information and the AI model. Optionally, the near-real-time RIC may submit the inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near real-time RIC is configured to train a model A, and inference is performed by using the model A. For example, the non-real-time RIC is configured to train a model B, and inference is performed by using the model B. For example, the non-real-time RIC is configured to train a model C, and information about the model C is submitted to the near-real-time RIC, and the near-real-time RIC performs inference by using the model C.

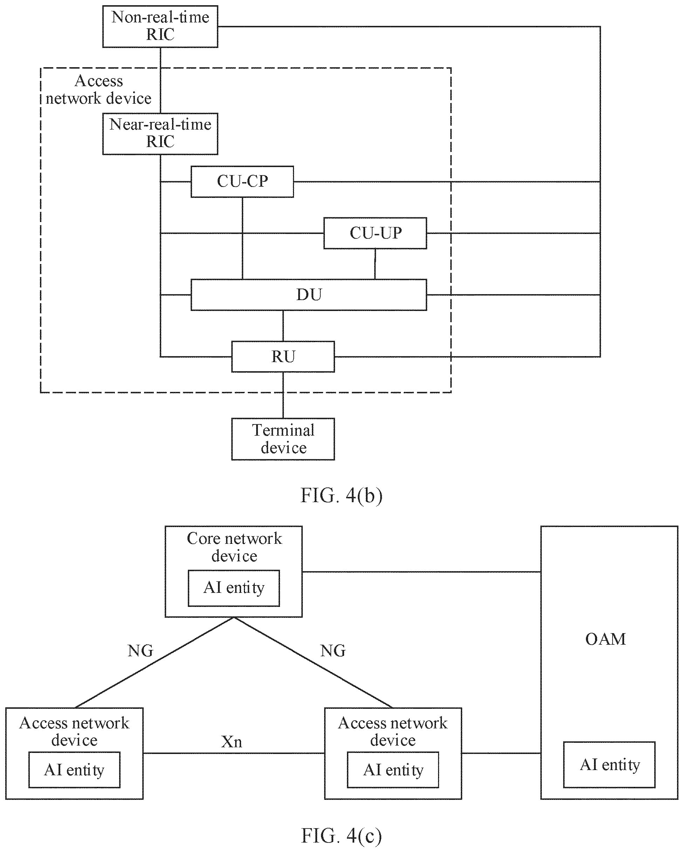

FIG. 4(b) is an example diagram of a network architecture to which a method provided in this disclosure may be applied. Compared with FIG. 4(a), in FIG. 4(a), a CU is separated into a CU-CP and a CU-UP.

FIG. 4(c) is an example diagram of a network architecture to which a method provided in this disclosure may be applied. As shown in FIG. 4(c), optionally, an access network device includes one or more AI entities, and a function of the AI entity is similar to that of the near-real-time RIC. Optionally, OAM includes one or more AI entities, and a function of the AI entity is similar to that of the non-real-time RIC. Optionally, a core network device includes one or more AI entities, and a function of the AI entity is similar to that of the non-real-time RIC. When the OAM and the core network device each include an AI entity, models obtained by training by the AI entities of the OAM and the core network device are different, and/or models used for inference are different.

In this disclosure, different models include but are not limited to at least one of the following differences: a structure parameter of the model (for example, a quantity of layers of the model, a connection relationship between layers, a quantity of neurons included in each layer, an activation function of a neuron, a weight of a neuron, and/or an offset of a neuron), input parameters of the model, or output parameters of the model.

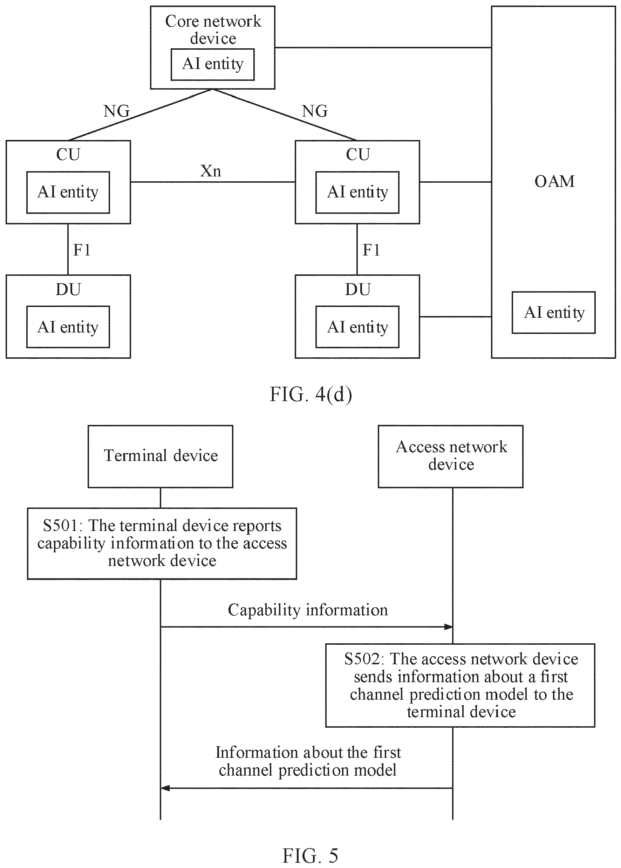

FIG. 4(d) is an example diagram of a network architecture to which a method provided in this disclosure may be applied. Compared with FIG. 4(c), an access network device in FIG. 4(d) is separated into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained by training by the AI entities of the CU and the DU are different, and/or models used for inference are different. Optionally, the CU in FIG. 4(d) may be further separated into a CU-CP and a CU-UP. Optionally, one or more AI models may be deployed on the CU-CP. Optionally, one or more AI models may be deployed on the CU-UP. Optionally, in FIG. 4(c) or FIG. 4(d), the OAM of the access network device and the OAM of the core network device may be separately and independently deployed.

In this disclosure, one parameter or a plurality of parameters may be obtained through inference by using one model. Learning processes of different models may be deployed on different devices or nodes, or may be deployed on an identical device or node. Inference processes of different models may be deployed on different devices or nodes, or may be deployed on an identical device or node.

It may be understood that, in this disclosure, the AI entity, the access network device, or the like may perform some or all of the steps in this disclosure. These steps or operations are merely examples. This disclosure may further perform other operations or variations of various operations. In addition, the steps may be performed in an order different from an order presented in this disclosure, and not all the operations in this disclosure may be performed.

In various embodiments of this disclosure, unless otherwise stated or there is a logic conflict, terms and/or descriptions in different examples are consistent and may be mutually referenced, and technical features in different examples may be combined based on an internal logical relationship thereof, to form a new example.

It may be understood that, various numbers in examples of this disclosure are merely used for differentiation for ease of description, and are not used to limit the scope of examples of this disclosure. The sequence numbers of the foregoing processes do not mean execution orders, and the execution orders of the processes should be determined based on functions and internal logic of the processes.

The network architecture and the service scenario described in this disclosure are intended to describe the technical solutions in this disclosure more clearly, and do not constitute a limitation on the technical solutions provided in this disclosure. A person of ordinary skill in the art may know that, with evolution of the network architecture and emergence of new service scenarios, the technical solutions provided in this disclosure are also applicable to similar technical problems.

Optionally, before the method provided in this disclosure is performed, capability exchange may be further performed between a terminal device and an access network device. Details may be shown in FIG. 5. FIG. 5 is a schematic flowchart of capability exchange according to this disclosure. The following steps are included.

Optionally, S501: The terminal device reports capability information to the access network device.

The capability information may include but is not limited to at least one of the following information: whether the terminal device supports running of an artificial intelligence model; a supported artificial intelligence model type (for example, a convolutional neural network (convolutional neural network, CNN), a recursive neural network (recursive neural network, RNN), or a random forest model); a size of memory space that may be used by the terminal device to store the artificial intelligence model; computing power information of the terminal device, which may be a computing capability for running the artificial intelligence model, for example, information such as a computing speed of a processor and/or a volume of data that can be processed by the processor; energy consumption information of the terminal device, for example, running power consumption of a chip and/or a battery capacity; or hardware information of the terminal device, which includes but is not limited to configuration information (a quantity of antennas and/or a polarization direction) of an antenna, a quantity of radio frequency channels, and/or the like.

The terminal device may actively report the capability information, or may report the capability information when receiving a request message from the access network device. This is not limited in this disclosure.

S501 is an optional operation. For example, when a capability of the terminal device is agreed on in a protocol, the method shown in FIG. 5 does not need to include S501.

S502: The access network device sends information about a first channel prediction model to the terminal device.

The first channel prediction model may be the artificial intelligence model. The access network device may send the information about the first channel prediction model when determining that the terminal device supports running of the artificial intelligence model. Alternatively, the access network device may not send the information about the first channel prediction model. In other words, the first channel prediction model may be agreed on in a protocol, or the access network device and the terminal device download the first channel prediction model through an identical download address.

In a first possible implementation, the information about the first channel prediction model may be information including a model parameter, a model structure, a cascading relationship, an activation function, and the like used to describe the first channel prediction model. The terminal device may determine the first channel prediction model based on the information about the first channel prediction model. In a second possible implementation, the information about the first channel prediction model may also be computer code that describes the first channel prediction model, and the terminal device may perform compilation based on the computer code, to obtain the first channel prediction model. In a third possible implementation, the information about the first channel prediction model may be a download address for downloading the first channel prediction model, and the terminal device may download the first channel prediction model based on the download address.

In this disclosure, the first channel prediction model may be a trained artificial intelligence model, and the first channel prediction model may be used to predict channel state information of a downlink channel from the access network device to the terminal device.

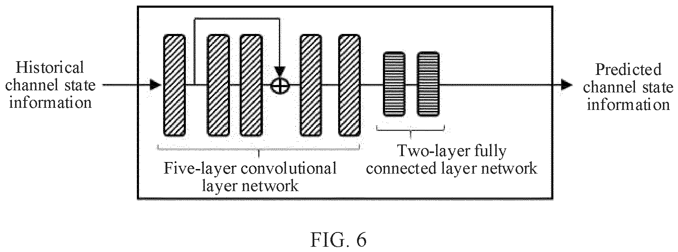

For example, FIG. 6 is a diagram of a structure of an artificial intelligence model according to this disclosure. A type of the artificial intelligence model may be a neural network model, a random forest model, a linear regression model, or the like. This is not limited in this disclosure. The artificial intelligence model includes a five-layer convolutional layer network and a two-layer fully connected layer network. This is merely an example, and does not represent any limitation on a quantity of convolutional layer networks and fully connected layer networks. The convolutional layer network processes an obtained input and transmits the input to the fully connected layer network. The fully connected layer network finally outputs a result. An input of the artificial intelligence model may be historical channel state information (namely, channel state information obtained through measurement at a current moment and before the current moment), and an output of the artificial intelligence model is predicted channel state information. A propagation form of a radio signal on a channel is $Y = HX + N$, where $H$ is channel state information, $X$ is a reference signal, $N$ is noise, and $Y$ is a received signal. A purpose of a channel prediction model is to predict, by using H of the historical channel state information, channel state information that is at a future moment.

When the input historical channel state information is a channel frequency domain response, a dimension of the input historical channel state information may be $T * F * M * N$. When the input historical channel state information is a channel time domain response, a dimension of the input historical channel state information may be $T * L * N$, where $T$ is a quantity of symbols of the historical channel state information in a time dimension, $F$ is a quantity of subcarriers in a frequency domain dimension, $L$ is a quantity of sampling points of a time domain channel, $M$ is a quantity of antennas of a receiver (for example, a terminal device), and $N$ is a quantity of antennas of a transmitter (for example, an access network device). The symbol herein may be an orthogonal frequency division multiplexing (orthogonal frequency division multiplexing, OFDM) symbol, or the like.

When the output predicted channel state information is a channel frequency domain response, a dimension of the output predicted channel state information is $T * F * M * N$; and when the output predicted channel state information is a channel time domain response, a dimension of the output predicted channel state information is $T * L * N$.

In this disclosure, a first channel prediction model may be trained by the access network device, or a pre-trained first channel prediction model is obtained from a third-party network entity. For example, an AI entity performs training, and the access network device obtains the trained first channel prediction model from the AI entity. A specific training process of the first channel prediction model is not limited in this disclosure. Training data needed for training the channel prediction model is channel state measurement information, and the training data may be generated by using a channel model defined by the 3rd generation partnership project (the 3rd generation partnership project, 3GPP), collected in an actual environment, or generated by another simulation platform, such as a ray tracking channel simulation platform. This is not limited in this disclosure.

In this disclosure, the same channel prediction model may be deployed on the access network device and the terminal device. In an implementation, the first channel prediction model is also deployed on the access network device, or the same artificial intelligence model is deployed on the access network device and the terminal device. That the same artificial intelligence model is deployed on the access network device and the terminal device may mean: A model parameter, a model structure, a cascading relationship, an activation function, and the like of the artificial intelligence model deployed on the access network device are completely the same as those of the artificial intelligence model deployed on the terminal device.

In another implementation, information such as the model structure of the artificial intelligence model in the access network device may be different from that of the artificial intelligence model in the terminal device. However, when input information is the same, output information is the same or a difference between output information is less than or equal to a threshold. In other words, if the access network device and the terminal device agree on an identical model input data format and input same information, an identical prediction result may be output through respective artificial intelligence models.

After the first channel prediction model is deployed on the terminal device, the access network device may send a downlink signal to the terminal device, so that the terminal device may input, into the first channel prediction model, estimated downlink measurement information to be obtained by measuring the downlink signal, to determine whether a prediction result of the first channel prediction model is accurate. The following provides description in detail.

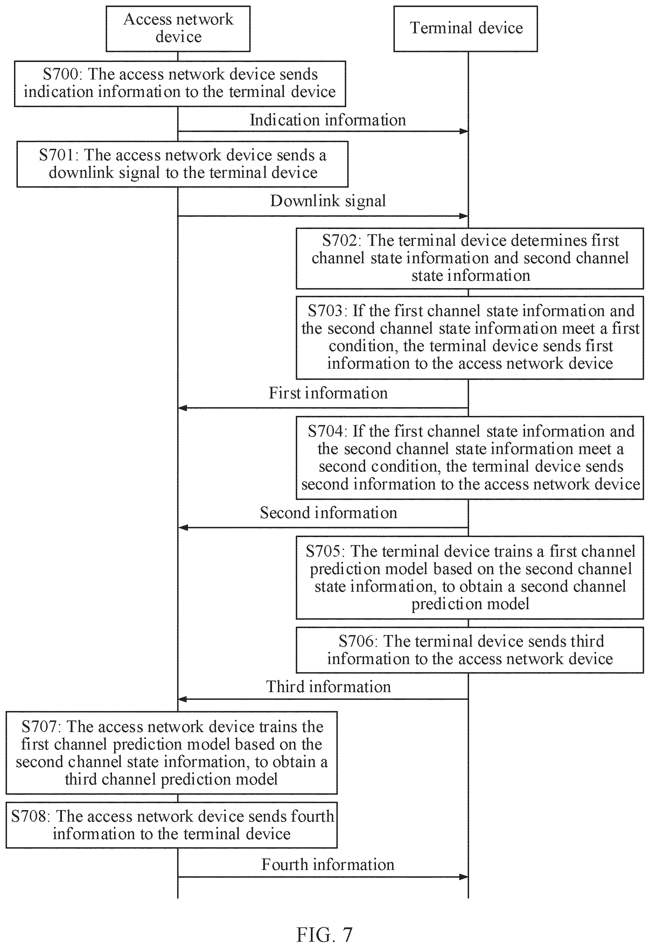

FIG. 7 is a schematic flowchart of a calibration method according to this disclosure. The procedure is described by using an example of interaction between a terminal device and an access network device. In the procedure shown in FIG. 7, an identical channel prediction model may be deployed on the terminal device and the access network device, and the access network device may predict, by using the channel prediction model, a downlink signal with highest received signal strength in downlink signals received by the terminal device. The terminal device may check a prediction result of the deployed channel prediction model, and when the prediction result is inaccurate, may send feedback to the access network device. Specifically, the method includes the following steps.

Optionally, S700: The access network device sends indication information to the terminal device.

The indication information may indicate at least one of the following information.

(1) Format information of an input and an output of the channel prediction model, indicating information such as a dimension of input information and a dimension of output information of the channel prediction model, where for example, when input historical channel state information is a channel frequency domain response, the dimension of the input information may be $T * F * M * N$; when input historical channel state information is a channel time domain response, the dimension of the input information may be $T * L * N$; when output predicted channel state information is a channel frequency domain response, the dimension of the output information is $T * F * M * N$; and when output predicted channel state information is a channel time domain response, the dimension of the output information is $T * L * N$.

(2) Prediction time information, indicating an interval between predicted channel state information and historical channel state information in time domain, in other words, indicating a quantity of symbols after the historical channel state information and after which the channel state information is predicted.

(3) Channel prediction quality evaluation function information, used to calculate a function, for example, a Euclidean distance function, of a difference metric value between predicted channel state information and actual channel state information, where assuming that the predicted channel state information is H', and the actual channel state information estimated by a receiver is H, the Euclidean distance function used to calculate the difference metric value is $e=\|H-H'\|$.

(4) Threshold information, indicating a first threshold, where the threshold information may further indicate a second threshold; and optionally, the indication information may not include the threshold information, and for example, the first threshold and the second threshold may be agreed on in a protocol or set in another manner, which is not limited in this disclosure.

(5) Feedback indication information, indicating whether the terminal device feeds back, when the difference metric value between the predicted channel state information and the actual channel state information is less than the first threshold, one piece of indication signaling or no information to indicate that the channel prediction model is trusted or a prediction result is accurate.

In addition, for any piece of the foregoing information, when the indication information may not include the information, content indicated by the information may be agreed on in a protocol. For example, the indication information may not include the format information of the input and the output of the channel prediction model. In this case, the format information of the input and the output of the channel prediction model may be agreed on in a protocol.

S701: The access network device sends a downlink signal to the terminal device, and correspondingly, the terminal device receives the downlink signal from the access network device.

The access network device may periodically send the downlink signal to the terminal device based on a preset periodicity. For example, the preset periodicity is P time units, and P may be an integer greater than 1. In this case, the access network device sends the downlink signal once every P time units. The access network device may send the downlink signal in an aperiodic manner. This is not limited in this disclosure. A type of the downlink signal is not limited. The downlink signal may be a downlink reference signal, for example, may be a channel state information reference signal (channel state information reference signal, CSI-RS). Alternatively, the downlink signal may be a signal of another type. This is not limited in this disclosure.

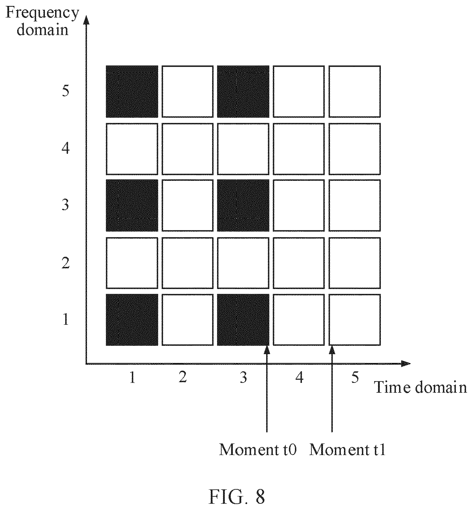

For example, FIG. 8 is a diagram of sending of a downlink signal according to this disclosure. In FIG. 8, a black grid represents a resource for sending a downlink reference signal, and a white grid represents a resource for sending no downlink reference signal. One resource includes one frequency unit in frequency domain, and includes one time unit in time domain. In FIG. 8, an access network device sends a downlink signal in a time unit 1 and a time unit 3. Specifically, in the time unit 1 and the time unit 3, the downlink signal is separately sent through a frequency unit 1, a frequency unit 3, and a frequency unit 5. The time unit may be a radio frame, a subframe, a slot, a symbol, or the like, and the frequency unit may be a subcarrier spacing, a bandwidth part (bandwidth part, BWP), or the like.

In an initial access phase of the terminal device, the terminal device may perform channel estimation on each of first Q received downlink signals to determine one piece of channel state information, so that the terminal device may determine Q pieces of channel state information. A value of Q may be configured by the access network device, or may be agreed on in a protocol, and Q is an integer greater than 0. The terminal device may feed back the Q pieces of channel state information to the access network device.

For a downlink signal after the Q downlink signals sent by the access network device, the terminal device may feed back channel state information corresponding to the received downlink signal, or may not feed back channel state information. If the terminal device does not feed back the channel state information, the access network device may use one or more of the Q pieces of channel state information as historical channel state information, and the access network device may input the historical channel state information into the first channel prediction model, to obtain predicted channel state information. In this disclosure, if the access network device needs to predict channel state information corresponding to a downlink signal transmitted in a first time unit, historical channel state information used for predicting the channel state information may not only include the channel state information obtained from the terminal device before the first time unit, but also include channel state information predicted by the access network device before the first time unit. For ease of description, in this disclosure, the historical channel state information that is input by the access network device into the channel prediction model for prediction is referred to as second historical channel state information, and historical channel state information that is input by the terminal device into the channel prediction model for prediction is referred to as first historical channel state information.

For example, with reference to FIG. 8, at a moment $t_0$ (an end moment of the time unit 3), the access network device has obtained second historical channel state information at a moment $t \leq t_0$, for example, channel state information corresponding to the downlink signal transmitted in the time unit 1 and channel state information corresponding to the downlink signal transmitted in the time unit 3. The access network device may input one or more pieces of channel state information in the channel state information into the first channel prediction model, to predict channel state information after a moment $t_1$ (a start moment of the time unit 5). The channel state information may be referred to as the predicted channel state information. For a downlink signal after the moment $t_1$, for example, a downlink signal transmitted in the time unit 5, the terminal device may not feed back channel state information. The access network device may input one or more pieces of channel state information before the time unit 5 into the channel prediction model, to continue to predict the channel state information of the downlink signal transmitted in the time unit 5. Other cases may be deduced by analogy. In this method, the terminal device may not feed back the estimated channel state information, to reduce air interface overheads and improve system effici ency.

Further, the terminal device may predict, based on the first channel prediction model, channel state information that is at a future moment, the terminal device may further obtain actual channel state information by measuring the downlink signal, and the access network device or the terminal device may calibrate the first channel prediction model based on the predicted channel state information and the actual channel state information. For details, refer to the following descriptions.

S702: The terminal device determines first channel state information and second channel state information.

The first channel state information is obtained through prediction via the first channel prediction model, and the second channel state information is determined based on channel estimation on the downlink signal from the access network device.

Specifically, if the terminal device needs to predict first channel state information that is in a second time unit, the terminal device may use, as the first historical channel state information, one or more pieces of channel state information that are obtained by performing channel estimation on one or more downlink signals before the second time unit. The terminal device may input the first historical channel state information into the first channel prediction model, and obtain the first channel state information based on an output of the first channel prediction model.

Further, if the terminal device receives the downlink signal from the access network device in the second time unit, the terminal device may perform channel estimation on the downlink signal, to obtain the second channel state information.

The terminal device may determine, based on the second channel state information, whether the first channel state information predicted via the first channel prediction model is accurate.

S703: If the first channel state information and the second channel state information meet a first condition, the terminal device sends first information to the access network device, and correspondingly, the access network device receives the first information from the terminal device.

When the first channel state information and the second channel state information meet the first condition, the terminal device may consider that a prediction result of the first channel prediction model is inaccurate, and the first channel prediction model needs to be updated. In a possible implementation, the first information indicates the second channel state information, and the foregoing information may be for updating the first channel prediction model. How to specifically update the first channel prediction model is described in detail below. In another possible implementation, the first information indicates that the first channel prediction model needs to be updated, or indicates that the first channel prediction model is untrusted. In addition, the first information may further indicate other information. For example, the first information may further indicate a time unit corresponding to the second channel state information, namely, the second time unit.

The first condition may include: A difference metric value between the first channel state information and the second channel state information is greater than or equal to the first threshold. The first threshold may be configured by the access network device, or may be agreed on in a protocol, or may be determined by the terminal device.

In this disclosure, when "less than" or "greater than" is used for comparison, "less than" may also be replaced with "less than or equal to", and "greater than" may also be replaced with "greater than or equal to", and vice versa.

In this disclosure, the difference metric value between the first channel state information and the second channel state information may satisfy the following form: $e=\|H-H'\|$.

e represents the difference metric value, the first channel state information is H', and the second channel state information is H.

The foregoing is merely an example, the difference metric value may be further obtained in another method, and examples are not described herein one by one.

S704: If the first channel state information and the second channel state information meet a second condition, the terminal device sends second information to the access network device, and correspondingly, the access network device receives the second information from the terminal device.

When the first channel state information and the second channel state information meet the second condition, the terminal device may consider that the prediction result of the first channel prediction model is accurate, and the first channel prediction model does not need to be updated. In this case, in a possible implementation, the terminal device may not send the second information. In another possible implementation, the terminal device may send the second information. The second information may indicate that the first channel prediction model is trusted, the second information may indicate that the first channel prediction model does not need to be updated, or the second information indicates that the prediction result of the first channel prediction model is accurate.

The second condition may include any one of the following.

The difference metric value between the first channel state information and the second channel state information is less than the first threshold; or

the difference metric value between the first channel state information and the second channel state information is less than the second threshold, where the second threshold is less than or equal to the first threshold. The second threshold may be configured by the access network device, or may be agreed on in a protocol, or may be determined by the terminal device.

In this disclosure, when the prediction result of the first channel prediction model is inaccurate, the terminal device may update the first channel prediction model, or the access network device may update the first channel prediction model. The following separately provides descriptions.

When the terminal device updates the first channel prediction model, the following procedures may be performed.

S705: The terminal device trains the first channel prediction model based on the second channel state information, to obtain a second channel prediction model.

The terminal device may use the first historical channel state information and the second channel state information as a group of training data, to train the first channel prediction model, and a trained model is the second channel prediction model. The terminal device may update the first channel prediction model to the second channel prediction model. A specific method for updating the first channel prediction model to the second channel prediction model is not limited in this disclosure, for example, may be a back propagation gradient update algorithm.

After obtaining the second channel prediction model, the terminal device may indicate the second channel prediction model to the access network device through third information, that is, perform S706.

S706: The terminal device sends the third information to the access network device, and correspondingly, the access network device receives the third information from the terminal device.

Further, the access network device may update the first channel prediction model to the second channel prediction model based on the third information.

In this disclosure, in a possible implementation, the third information indicates the second channel prediction model. Specifically, the third information may include information including a model parameter, a model structure, a cascading relationship, an activation function, and the like used to describe the second channel prediction model. The terminal device may determine the second channel prediction model based on the third information. The third information may also include computer code that describes the second channel prediction model, and the terminal device may compile the computer code, to obtain the second channel prediction model.

In another possible implementation, the third information indicates information about the second channel prediction model, and the information about the second channel prediction model includes variation information between the second channel prediction model and the first channel prediction model. Specifically, the third information may include variation information between the information including a model parameter, a model structure, a cascading relationship, an activation function, and the like used to describe the second channel prediction model, and information including a model parameter, a model structure, a cascading relationship, an activation function, and the like used to describe the first channel prediction model.

In still another possible implementation, the third information indicates information about the second channel prediction model, and the information about the second channel prediction model includes gradient information of the second channel prediction model. Specifically, the third information may include a gradient calculation value that is when the first channel prediction model is updated to the second channel prediction model by using a gradient descent method.

In this disclosure, in a first scenario, provided that the first channel prediction model is updated, the terminal device indicates the second channel prediction model to the access network device, that is, performs S706.

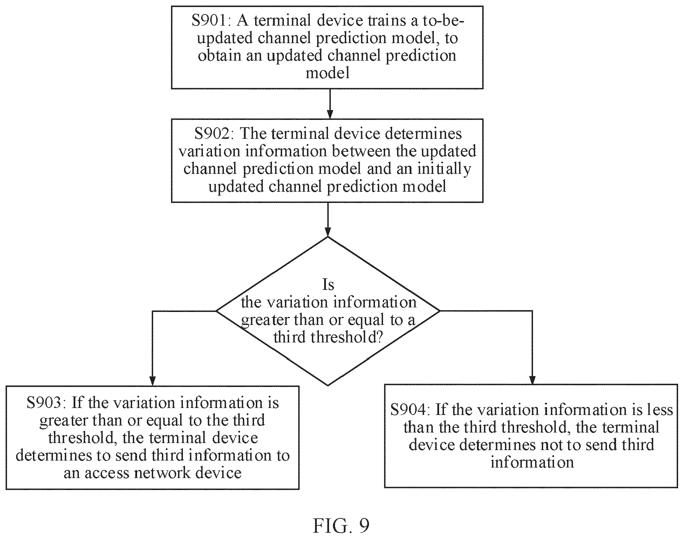

In the second scenario, when updating the first channel prediction model, the terminal device may determine whether the variation information between the second channel prediction model and the first channel prediction model is greater than a third threshold. When the variation information is greater than or equal to the third threshold, the terminal device sends the third information; when the variation information is less than the third threshold, the terminal device does not send the third information. To avoid loss of generality, this disclosure describes, by using the procedure shown in FIG. 9 as an example, how the terminal device determines whether to send the third information.

S901: The terminal device trains a to-be-updated channel prediction model, to obtain an updated channel prediction model.

An initial value of the to-be-updated channel prediction model is a first channel prediction model, and the to-be-updated channel prediction model is a channel prediction model currently deployed on the terminal device. The updated channel prediction model is obtained through training in S705. Assuming that the to-be-updated channel prediction model is the first channel prediction model, the updated channel prediction model obtained in this case is a second channel prediction model.

S902: The terminal device determines variation information between the updated channel prediction model and an initially updated channel prediction model.

The initially updated channel prediction model may be a channel prediction model that is indicated to an access network device last time through the third information, and an initial value of the initially updated channel prediction model is the first channel prediction model.

Assuming that the updated channel prediction model is the second channel prediction model, the initially updated channel prediction model herein is the first channel prediction model.

S903: If the variation information is greater than or equal to a third threshold, the terminal device determines to send the third information to the access network device.

The third threshold may be configured by the access network device, or may be agreed on in a protocol, or may be determined by the terminal device.

Further, in this case, the updated channel prediction model may be used as the initially updated channel prediction model. Assuming that the updated channel prediction model is the second channel prediction model, the initially updated channel prediction model in S902 may be set to the second channel prediction model.

S904: If the variation information is less than a third threshold, the terminal device determines not to send the third information.

When training the to-be-updated channel prediction model next time, the terminal device may perform the procedure of S901 to S904 again.

Because the variation information is less than the third threshold, it may be considered that the updated channel prediction model is not greatly different from the channel prediction model before the update, performance of the updated channel prediction model is close to that of the channel prediction model before the update, and a prediction result of the updated channel prediction model is close to that of the channel prediction model before the update. Therefore, the updated channel prediction model may not be indicated to the access network device.

With reference to the descriptions of the procedure shown in FIG. 9, in an example, assuming that the first channel prediction model is a prediction model A, the second channel prediction model is a prediction model B. The terminal device may perform the following procedures.

Step 1: Train the prediction model A, to obtain the prediction model B.

Step 2: Determine whether variation information between the prediction model A and the prediction model B is greater than or equal to the third threshold; and if the variation information between the prediction model A and the prediction model B is greater than or equal to the third threshold, go to step 3; or if the variation information between the prediction model A and the prediction model B is less than the second threshold, go to step 4.

Step 3: Send third information, where the third information in this step indicates information about the prediction model B.

Step 4: Skip sending third information.

If the variation information in step 2 is less than the second threshold, the terminal device does not send the third information this time.

Further, if the terminal device further needs to train the prediction model B, to obtain a prediction model C, the terminal device may perform the procedure shown in FIG. 9 again.

Step 5: Train the prediction model B, to obtain the prediction model C.

Step 6: Determine whether variation information between the prediction model C and the prediction model A is greater than or equal to the third threshold; and if the variation information between the prediction model C and the prediction model A is greater than or equal to the third threshold, go to step 7; or if the variation information between the prediction model C and the prediction model A is less than the third threshold, go to step 8.

Although the prediction model C is obtained by training the prediction model B, because the prediction model A is deployed on the access network device, and the terminal device does not indicate the prediction model A to the access network device, whether variation information between a latest prediction model in the terminal device and the prediction model in the access network device is greater than or equal to the third threshold needs to be determined.

Step 7: Send third information, where the third information in this step indicates information about the prediction model C.

Step 8: Skip sending third information.

According to the foregoing procedure, when the variation information between the updated channel prediction model and the channel prediction model indicated to the access network device last time is less than the third threshold, the updated channel prediction model may not be indicated to the access network device. This avoids frequently indicating the updated channel prediction model to the access network device, reduces signaling overheads, and improves system efficiency.

In this disclosure, the access network device may alternatively update the first channel prediction model. When the access network device updates the first channel prediction model, the following procedures may be performed.

S707: The access network device trains the first channel prediction model based on the second channel state information, to obtain a third channel prediction model.

The access network device may use the first historical channel state information and the second channel state information as a group of training data, to train the first channel prediction model, and a trained model is the third channel prediction model. The access network device may update the first channel prediction model to the third channel prediction model. The first historical channel state information may be indicated by the terminal device.

The access network device may also use the second historical channel state information and the second channel state information as a group of training data, to train the first channel prediction model, and obtain the third channel prediction model. The second historical channel state information includes one or more pieces of channel state information obtained by the access network device before the second time unit. The second historical channel state information may be the same as or different from the first historical channel state information. This is not limited in this disclosure.

The second channel prediction model obtained by the terminal device through training in S705 and the third channel prediction model obtained by the access network device through training in S707 may be an identical model. In this disclosure, for ease of description, the second channel prediction model and the third channel prediction model are distinguished, which does not necessarily mean that the two models are different models.

S708: The access network device sends fourth information to the terminal device, and correspondingly, the terminal device receives the fourth information from the access network device.

Further, the terminal device may update the first channel prediction model to the third channel prediction model based on the fourth information.

In this disclosure, the fourth information indicates the third channel prediction model, or indicates information about the third channel prediction model, and the information about the third channel prediction model includes variation information between the third channel prediction model and the first channel prediction model. For specific content of the fourth information, refer to the descriptions of the third information. Details are not described herein again.

In this disclosure, in the first scenario, the access network device sends the fourth information to the terminal device provided that the first channel prediction model is updated, that is, S706 is performed.

In a second scenario, when updating the first channel prediction model, the access network device may determine whether the variation information between the third channel prediction model and the first channel prediction model is greater than the third threshold. When the variation information is greater than or equal to the third threshold, the access network device sends the fourth information; when the variation information is less than the third threshold, the access network device does not send the fourth information. For details, refer to the procedure shown in FIG. 9, and details are not described herein again.

According to the method provided in this disclosure, the access network device and the terminal device use an identical channel prediction model, and the terminal device may test and monitor channel prediction quality online. When a deviation between the predicted first channel state information and the actually measured second channel state information is large, the channel prediction model may be updated, to avoid affecting communication performance. In addition, fed-back channel state information may be further used for online training and update of the channel prediction model, to continuously improve performance of the channel prediction model.

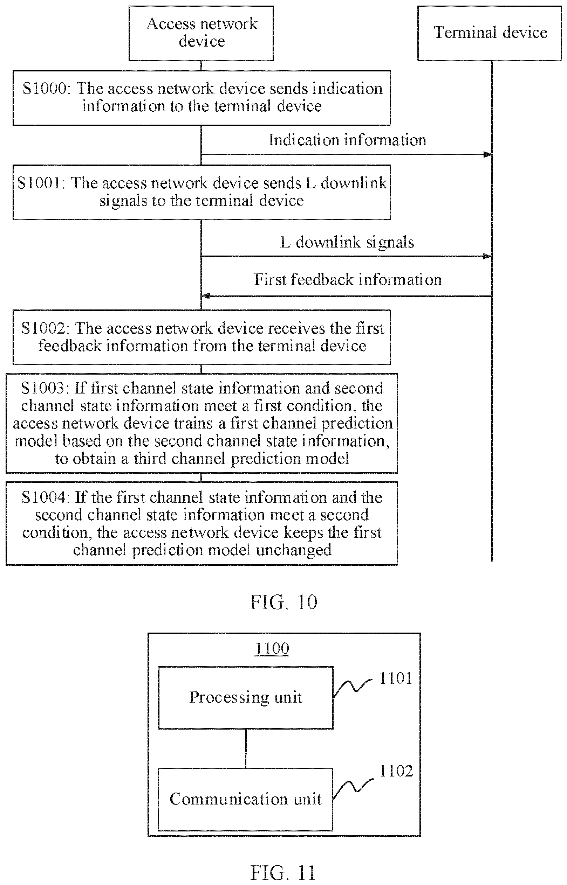

In this disclosure, the channel prediction model may alternatively not be deployed on the terminal device, but is deployed only in the access network device. The access network device checks the channel prediction model based on the information fed back by the terminal device. Specifically, FIG. 10 is a schematic flowchart of a calibration method according to this disclosure. The method includes the following steps.

Optionally, S1000: An access network device sends indication information to a terminal device.

For specific content of the indication information, refer to the descriptions in S700. Details are not described herein again.

S1001: The access network device sends L downlink signals to the terminal device.

S1002: The access network device receives first feedback information from the terminal device.

L is an integer greater than 0, the first feedback information may indicate second channel state information, the second channel state information is determined based on channel estimation on a first downlink signal, and the first downlink signal is one of the L downlink signals. The first downlink signal may be indicated by the access network device, or may be determined by the terminal device from the L downlink signals.

In other words, the terminal device does not need to perform channel estimation on each downlink signal, and the terminal device may select some of the downlink signals to perform channel estimation, so as to obtain channel state information. The access network device may indicate downlink signals that are to be specifically selected by the terminal device to perform channel estimation. For example, the access network device sends sampling information to the terminal device, where the sampling information indicates the terminal device to feed back channel state information of one downlink signal at an interval of W downlink signals, and W is an integer greater than 0.

The first feedback information may further indicate a second time unit, and the second time unit represents a time unit in which the first downlink signal for determining the second channel state information is located.

S1003: If first channel state information and the second channel state information meet a first condition, the access network device trains the first channel prediction model based on the second channel state information, to obtain a third channel prediction model.

The first channel state information may be obtained by the access network device through prediction via the first channel prediction model. Specifically, the access network device may obtain, before the second time unit, second historical channel state information including one or more pieces of channel state information. The access network device may input the second historical channel state information into the first channel prediction model, and obtain the first channel state information based on an output of the first channel prediction model.

When the first channel state information and the second channel state information meet the first condition, the access network device may consider that a prediction result of the first channel prediction model is inaccurate, and the first channel prediction model needs to be updated.

The access network device may use first historical channel state information and the second channel state information as a group of training data, to train the first channel prediction model, and a trained model is the third channel prediction model. Further, the access network device may update the first channel prediction model to the third channel prediction model.

In this disclosure, the first condition may include: A difference metric value between the first channel state information and the second channel state information is greater than or equal to a first threshold.

For other content of S1003, refer to the descriptions in S703. Details are not described herein again.

S1004: If the first channel state information and the second channel state information meet a second condition, the access network device keeps the first channel prediction model unchanged.

When the first channel state information and the second channel state information meet the second condition, the access network device may consider that the prediction result of the first channel prediction model is accurate, and the first channel prediction model does not need to be updated.

The second condition may include: The difference metric value between the first channel state information and the second channel state information is less than the first threshold.

For other content of S1004, refer to the descriptions in S704. Details are not described herein again.

According to the method provided in this disclosure, when determining that a deviation between the predicted first channel state information and the actually measured second channel state information is large, the access network device may update a channel prediction model, to avoid affecting communication performance, and continuously improve performance of the channel prediction model.

In the foregoing embodiments provided in this application, the method provided in embodiments of this application is described from a perspective of interaction between devices. To implement the functions in the methods provided in embodiments of this application, the access network device or the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In this embodiment of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 11, embodiments of this application further provide a communication apparatus 1100, configured to implement a function of the access network device or the terminal device in the foregoing methods. A form of the communication apparatus is not limited, and the communication apparatus may be a hardware structure, a software module, or a combination of a hardware structure and a software module. For example, the apparatus may be a software module or a chip system. In this embodiment of this application, the chip system may include a chip, or may include a chip and another discrete component. The communication apparatus 1100 may include: a processing unit 1101 and a communication unit 1102.

In embodiments of this application, the communication unit may also be referred to as a transceiver unit, and may include a sending unit and/or a receiving unit, respectively configured to perform the sending and receiving steps performed by the access network device, the AI entity, or the terminal device in the foregoing method embodiments.

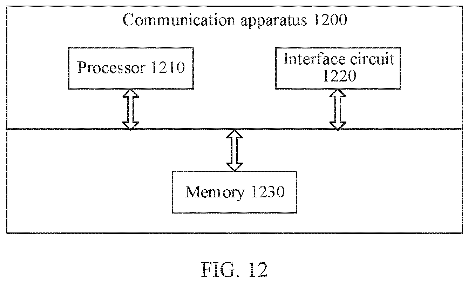

The following describes in detail a communication apparatus provided in embodiments of this application with reference to FIG. 11 and FIG. 12. It should be understood that, descriptions of apparatus embodiments correspond to the descriptions of the method embodiments. Therefore, for content that is not described in detail, refer to the method embodiments. For brevity, details are not described herein again.

The communication unit may also be referred to as a transceiver apparatus. The processing unit may also be referred to as a processing module, a processing apparatus, or the like. Optionally, a device configured to implement the receiving function in the communication unit 1102 may be considered as a receiving unit, and a device configured to implement the sending function in the communication unit 1102 may be considered as a sending unit. In other words, the communication unit 1102 includes the receiving unit and the sending unit. Sometimes, the communication unit may be implemented as a pin, a transceiver machine, a transceiver, a transceiver circuit, or the like. Sometimes, the processing unit may be implemented as a processor, a processing board, or the like. Sometimes, the receiving unit may be implemented as a pin, a receiver machine, a receiver, a receiving circuit, or the like. Sometimes, the sending unit may be implemented as a pin, a transmitter machine, a transmitter, a transmitting circuit, or the like.

When the communication apparatus 1100 performs a function of the terminal device in the procedure shown in FIG. 7 in the foregoing embodiment,

> the processing unit is configured to determine first channel state information and second channel state information, where the first channel state information is obtained through prediction via a first channel prediction model, and the second channel state information is determined based on channel estimation on a downlink signal from an access network device; and
> the communication unit is configured to send first information to the access network device if a difference metric value between the first channel state information and the second channel state information is greater than or equal to a first threshold, where the first information indicates the second channel state information.

When the communication apparatus 1100 performs a function of the access network device in the procedure shown in FIG. 7 in the foregoing embodiment,

> the processing unit is configured to send a downlink signal to a terminal device through the communication unit; and receive first information or second information from the terminal device, where the first information indicates second channel state information, and the second channel state information is determined based on channel estimation on the downlink signal; and
> the second information indicates that a prediction result of the first channel prediction model is accurate.

When the communication apparatus 1100 performs a function of the access network device in the procedure shown in FIG. 11 in the foregoing embodiment,

> the processing unit is configured to determine first channel state information, where the first channel state information is obtained through prediction via a first channel prediction model;
> the communication unit is configured to receive first information from a terminal device, where the first information indicates second channel state information corresponding to a downlink signal; and
> the processing unit is configured to train the first channel prediction model based on the second channel state information if a difference metric value between the first channel state information and the second channel state information is greater than or equal to a first threshold, to obtain a second channel prediction model; and update the first channel prediction model to the second channel prediction model.

The foregoing is merely an example. The processing unit 1101 and the communication unit 1102 may further perform other functions. For more detailed description, refer to related descriptions in the method embodiments shown in FIG. 7 or FIG. 11. Details are not described herein again.

FIG. 12 shows a communication apparatus 1200 according to an embodiment of this application. The apparatus shown in FIG. 12 may be an implementation of a hardware circuit of the apparatus shown in FIG. 11. The communication apparatus is applicable to the foregoing flowcharts, and performs the functions of the terminal device or the access network device in the foregoing method embodiments. For ease of description, FIG. 12 merely shows main components of the communication apparatus.

As shown in FIG. 12, a communication apparatus 1200 includes a processor 1210 and an interface circuit 1220. The processor 1210 and the interface circuit 1220 are coupled to each other. It may be understood that, the interface circuit 1220 may be a transceiver, a pin, an interface circuit, or an input/output interface. Optionally, the communication apparatus 1200 may further include a memory 1230, configured to: store instructions executed by the processor 1210, or store input data needed by the processor 1210 to run the instructions, or store data generated after the processor 1210 runs the instructions. Optionally, a part or all of the memory 1230 may be located in the processor 1210.

When the communication apparatus 1200 is configured to implement the method shown in FIG. 7 or FIG. 11, the processor 1210 is configured to implement a function of the processing unit 1101, and the interface circuit 1220 is configured to implement a function of the communication unit 1102.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in an access network device, the chip in the access network device implements a function of the access network device in the foregoing method embodiments. The chip in the access network device receives information from another module (for example, a radio frequency module or an antenna) in the access network device, where the information is sent by a terminal device to the access network device. Alternatively, the chip in the access network device sends information to another module (for example, a radio frequency module or an antenna) in the access network device, where the information is sent by the access network device to a terminal device.

As described above, in the method in FIG. 7, interaction between the access network device and the terminal device is used as an example. When the AI entity is located outside the access network device and is an independent module or network element, the access network device or the terminal device may forward the second channel state information to the AI entity, and the AI entity trains the first channel prediction model based on the second channel state information; and the AI entity may indicate information about the trained first channel prediction model to the access network device or the terminal device. Other processes are similar to the procedure in FIG. 5. Therefore, the foregoing descriptions about the access network device may be applied to the AI entity.

It may be understood that, the processor in this disclosure may be a central processing unit, or may be another general-purpose processor, a digital signal processor, an application-specific integrated circuit, a field programmable gate array or another programmable logic device, a transistor logic device, a hardware component, or any combination thereof. The general purpose processor may be a microprocessor or any regular processor or the like.

The memory in this disclosure may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art may understand that, this disclosure may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that, computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A calibration method, comprising:

   determining first channel state information and second channel state information, wherein the first channel state information is obtained through prediction via a first channel prediction model, and the second channel state information is determined based on channel estimation on a downlink signal from an access network device; and
   sending first information to the access network device if a difference metric value between the first channel state information and the second channel state information is greater than or equal to a first threshold, wherein the first information indicates the second channel state information.

2. The method according to claim 1, comprising: sending second information to the access network device if the difference metric value between the first channel state information and the second channel state information is less than a second threshold, wherein the second information indicates that a prediction result of the first channel prediction model is accurate, and the second threshold is less than or equal to the first threshold.

3. The method according to claim 1 or 2, wherein the method further comprises:

   training a to-be-updated channel prediction model based on the second channel state information, to obtain a second channel prediction model, wherein an initial value of the to-be-updated channel prediction model is the first channel prediction model;
   updating the to-be-updated channel prediction model to the second channel prediction model; and
   sending third information to the access network device, wherein the third information indicates information about the second channel prediction model.

4. The method according to claim 3, wherein the information about the second channel prediction model comprises variation information between the second channel prediction model and the first channel prediction model.

5. The method according to claim 3 or 4, wherein the method further comprises:
   updating the first channel prediction model to the second channel prediction model.

6. The method according to any one of claims 3 to 5, wherein the sending third information to the access network device comprises:
   sending the third information to the access network device when determining that the variation information between the first channel prediction model and the second channel prediction model is greater than or equal to a third threshold.

7. The method according to claim 1 or 2, wherein the method further comprises:
   receiving fourth information from the access network device, wherein the fourth information indicates information about a third channel prediction model.

8. The method according to claim 7, wherein the method further comprises:
   updating the first channel prediction model to the third channel prediction model.

9. The method according to claim 7 or 8, wherein the information about the third channel prediction model comprises variation information between the third channel prediction model and the first channel prediction model.

10. The method according to any one of claims 1 to 9, wherein the first channel prediction model is configured by the access network device, and the first channel prediction model is the same as a channel prediction model that is in the access network device.

**11.** The method according to any one of claims 1 to 10, wherein the first information further indicates a time unit corresponding to the second channel state information.

**12.** A calibration method, comprising:

sending a downlink signal to a terminal device; and
receiving first information or second information from the terminal device, wherein
the first information indicates second channel state information, and the second channel state information is determined based on channel estimation on the downlink signal; and
the second information indicates that a prediction result of a first channel prediction model is accurate.

**13.** The method according to claim 12, wherein if the first information is received, the method further comprises:

training a to-be-updated channel prediction model based on the second channel state information, to obtain a third channel prediction model, wherein an initial value of the to-be-updated channel prediction model is the first channel prediction model;
updating the to-be-updated channel prediction model to the third channel prediction model; and
sending fourth information to the terminal device, wherein the fourth information indicates information about the third channel prediction model.

**14.** The method according to claim 13, wherein the information about the third channel prediction model comprises variation information between the third channel prediction model and the first channel prediction model.

**15.** The method according to claim 13 or 14, wherein the sending fourth information to the terminal device comprises: sending the fourth information to the terminal device when determining that the variation information between the first channel prediction model and the third channel prediction model is greater than or equal to a third threshold.

**16.** The method according to claim 12, wherein the method further comprises:

receiving third information from the terminal device, wherein the third information indicates information about a second channel prediction model; and
updating the first channel prediction model to the second channel prediction model.

**17.** The method according to any one of claims 12 to 16, wherein a difference metric value between first channel state information and the second channel state information is greater than or equal to a first threshold, and the first channel state information is obtained through prediction via the first channel prediction model.

**18.** A calibration method, comprising:

determining first channel state information, wherein the first channel state information is obtained through prediction via a first channel prediction model;
receiving first information from a terminal device, wherein the first information indicates second channel state information corresponding to a downlink signal;
training the first channel prediction model based on the second channel state information if a difference metric value between the first channel state information and the second channel state information is greater than or equal to a first threshold, to obtain a second channel prediction model; and
updating the first channel prediction model to the second channel prediction model.

**19.** The method according to claim 18, wherein the first information further indicates a time unit corresponding to the second channel state information.

**20.** A communication apparatus, configured to implement the method according to any one of claims 1 to 11.

**21.** A communication apparatus, configured to implement the method according to any one of claims 12 to 19.

**22.** A communication apparatus, comprising a processor, wherein the processor is coupled to a memory; and the processor is configured to execute a computer program or instructions stored in the memory, to enable the communication apparatus to implement the method according to any one of claims 1 to 11.

**23.** A communication apparatus, comprising a processor, wherein the processor is coupled to a memory; and the processor is configured to execute a computer program or instructions stored in the memory, to enable the communication apparatus to implement the method according to any one of claims 12 to 19.

**24.** A computer-readable storage medium, storing a computer program or instructions, wherein when the computer program or the instructions are run on a computer, the computer is enabled to implement the method according to any one of claims 1 to 11, or the computer is enabled to implement the method according to any one of claims 12 to 19.

**25.** A computer program product, comprising instructions, wherein when the instructions are run on a computer, the computer is enabled to implement the method according to any one of claims 1 to 11, or the computer is enabled to implement the method according to any one of claims 12 to 19.

**26.** A communication system, comprising the communication apparatus according to claim 20 or 22 and the communication apparatus according to claim 21 or 23.

FIG. 1

FIG. 2

FIG. 3

FIG. 4(a)

FIG. 4(b)

FIG. 4(c)

FIG. 4(d)

FIG. 5

Historical channel state information

Predicted channel state information

Five-layer convolutional layer network

Two-layer fully connected layer network

FIG. 6

```
┌─────────────────┐                          ┌─────────────────┐
│ Access network  │                          │ Terminal device │
│     device      │                          │                 │
└─────────────────┘                          └─────────────────┘
┌──────────────────────────────────────┐
│ S700: The access network device sends │
│ indication information to the terminal device │
└──────────────────────────────────────┘
              │         Indication information         │
              │───────────────────────────────────────▶│
┌──────────────────────────────────────┐
│ S701: The access network device sends a │
│   downlink signal to the terminal device │
└──────────────────────────────────────┘
              │           Downlink signal              │
              │───────────────────────────────────────▶│
                        ┌────────────────────────────────────────┐
                        │ S702: The terminal device determines first │
                        │ channel state information and second channel │
                        │           state information              │
                        └────────────────────────────────────────┘
                        ┌────────────────────────────────────────┐
                        │ S703: If the first channel state information and │
                        │ the second channel state information meet a first │
                        │   condition, the terminal device sends first │
                        │ information to the access network device  │
                        └────────────────────────────────────────┘
              │         First information              │
              │◀───────────────────────────────────────│
                        ┌────────────────────────────────────────┐
                        │ S704: If the first channel state information and │
                        │  the second channel state information meet a │
                        │   second condition, the terminal device sends │
                        │ second information to the access network device │
                        └────────────────────────────────────────┘
              │        Second information               │
              │◀───────────────────────────────────────│
                        ┌────────────────────────────────────────┐
                        │ S705: The terminal device trains a first channel │
                        │  prediction model based on the second channel │
                        │  state information, to obtain a second channel │
                        │            prediction model             │
                        └────────────────────────────────────────┘
                        ┌────────────────────────────────────────┐
                        │ S706: The terminal device sends third    │
                        │ information to the access network device  │
                        └────────────────────────────────────────┘
              │         Third information               │
              │◀───────────────────────────────────────│
┌──────────────────────────────────────┐
│ S707: The access network device trains the │
│ first channel prediction model based on the │
│ second channel state information, to obtain a │
│     third channel prediction model      │
└──────────────────────────────────────┘
┌──────────────────────────────────────┐
│ S708: The access network device sends fourth │
│   information to the terminal device     │
└──────────────────────────────────────┘
              │        Fourth information               │
              │───────────────────────────────────────▶│
```

FIG. 7

FIG. 8

S901: A terminal device trains a to-be-updated channel prediction model, to obtain an updated channel prediction model

S902: The terminal device determines variation information between the updated channel prediction model and an initially updated channel prediction model

Is the variation information greater than or equal to a third threshold?

S903: If the variation information is greater than or equal to the third threshold, the terminal device determines to send third information to an access network device

S904: If the variation information is less than the third threshold, the terminal device determines not to send third information

FIG. 9

```
┌─────────────────┐                              ┌─────────────────┐
│ Access network  │                              │ Terminal device │
│     device      │                              │                 │
└─────────────────┘                              └─────────────────┘
         │                                                │
┌──────────────────────────────────────────┐             │
│ S1000: The access network device sends indication       │
│     information to the terminal device     │            │
└──────────────────────────────────────────┘             │
         │          Indication information                │
         │───────────────────────────────────────────────▶
┌──────────────────────────────────────────┐             │
│ S1001: The access network device sends L downlink       │
│        signals to the terminal device      │            │
└──────────────────────────────────────────┘             │
         │            L downlink signals                  │
         │───────────────────────────────────────────────▶
         │          First feedback information            │
         │◀───────────────────────────────────────────────
┌──────────────────────────────────────────┐             │
│ S1002: The access network device receives the first     │
│   feedback information from the terminal device         │
└──────────────────────────────────────────┘             │
┌──────────────────────────────────────────┐             │
│ S1003: If first channel state information and second    │
│  channel state information meet a first condition, the  │
│ access network device trains a first channel prediction │
│ model based on the second channel state information,    │
│     to obtain a third channel prediction model          │
└──────────────────────────────────────────┘             │
┌──────────────────────────────────────────┐             │
│ S1004: If the first channel state information and the   │
│   second channel state information meet a second        │
│ condition, the access network device keeps the first    │
│      channel prediction model unchanged                 │
└──────────────────────────────────────────┘             │
```

FIG. 10

```
┌─────────────────────────────────────────┐
│                  1100                     │
│   ┌──────────────────────────┐            │
│   │                          │ ⌇ ⌐ 1101   │
│   │     Processing unit      │            │
│   │                          │            │
│   └──────────────────────────┘            │
│                 │                         │
│   ┌──────────────────────────┐            │
│   │                          │ ⌇ 1102     │
│   │   Communication unit     │            │
│   │                          │            │
│   └──────────────────────────┘            │
└─────────────────────────────────────────┘
```

FIG. 11

Communication apparatus 1200

Processor 1210

Interface circuit 1220

Memory 1230

FIG. 12

## INTERNATIONAL SEARCH REPORT

| International application No. |
|---|
| **PCT/CN2022/133534** |

**A.    CLASSIFICATION OF SUBJECT MATTER**

H04B17/309(2015.01)i

According to International Patent Classification (IPC) or to both national classification and IPC

**B.    FIELDS SEARCHED**

Minimum documentation searched (classification system followed by classification symbols)

H04B H04W

Documentation searched other than minimum documentation to the extent that such documents are included in the fields searched

Electronic data base consulted during the international search (name of data base and, where practicable, search terms used)

CNTXT; CNKI; WPABSC; ENTXTC; ENTXT; 3GPP: 信道状态, 信道估计, 训练, 更新, 预测, 模型, 差异性, 差值, 阈值, 人工智能, CSI, channel estimate, train, update, prediction, model, difference, threshold, AI

**C.    DOCUMENTS CONSIDERED TO BE RELEVANT**

| Category* | Citation of document, with indication, where appropriate, of the relevant passages | Relevant to claim No. |
|---|---|---|
| Y | WO 2021051362 A1 (ALCATEL-LUCENT SHANGHAI BELL CO., LTD. et al.) 25 March 2021 (2021-03-25)<br>        description, paragraphs 123-169 | 1-26 |
| Y | WO 2020139181 A1 (TELEFONAKTIEBOLAGET LM ERICSSON (PUBL)) 02 July 2020 (2020-07-02)<br>        description, page 16, line 18 to page 21, line 12 | 1-26 |
| A | CN 109076403 A (HUAWEI TECHNOLOGIES CO., LTD.) 21 December 2018 (2018-12-21)<br>        entire document | 1-26 |
| A | CN 110034792 A (RESEARCH INSTITUTE OF CHINA MOBILE COMMUNICATIONS CORPORATION et al.) 19 July 2019 (2019-07-19)<br>        entire document | 1-26 |
| A | CN 113595666 A (HUAZHONG UNIVERSITY OF SCIENCE AND TECHNOLOGY) 02 November 2021 (2021-11-02)<br>        entire document | 1-26 |

☐ Further documents are listed in the continuation of Box C.          ☑ See patent family annex.

| | |
|---|---|
| *        Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **31 January 2023** | **07 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/133534**

| Patent document cited in search report | | | Publication date (day/month/year) | Patent family member(s) | | | Publication date (day/month/year) |
|---|---|---|---|---|---|---|---|
| WO | 2021051362 | A1 | 25 March 2021 | EP | 4032341 | A1 | 27 July 2022 |
| | | | | US | 2022376957 | A1 | 24 November 2022 |
| WO | 2020139181 | A1 | 02 July 2020 | US | 2022078637 | A1 | 10 March 2022 |
| | | | | EP | 3903243 | A1 | 03 November 2021 |
| | | | | EP | 3903243 | A4 | 03 November 2021 |
| CN | 109076403 | A | 21 December 2018 | WO | 2017186309 | A1 | 02 November 2017 |
| CN | 110034792 | A | 19 July 2019 | None | | | |
| CN | 113595666 | A | 02 November 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111406622